Europäisches Patentamt

(19) European Patent Office

Office européen des brevets

(11) Numéro de publication : **0 370 918 B1**

# (12) FASCICULE DE BREVET EUROPEEN

(45) Date de publication du fascicule du brevet :
08.01.92 Bulletin 92/02

(21) Numéro de dépôt : 89403252.3

(22) Date de dépôt : 24.11.89

(51) Int. Cl.$^5$ : **B29C 67/18, B29C 67/24, B29C 33/04, B29C 67/14, A47K 3/02**

(54) **Procédé de réalisation d'articles par coulée de béton polyester entre deux coques dont l'une est obtenue par thermoformage.**

(30) Priorité : 25.11.88 FR 8815402

(43) Date de publication de la demande :
30.05.90 Bulletin 90/22

(45) Mention de la délivrance du brevet :
08.01.92 Bulletin 92/02

(84) Etats contractants désignés :
AT BE CH DE ES GB IT LI

(56) Documents cités :
EP-A- 0 131 345
CH-A- 509 867
DE-A- 3 604 175
US-A- 3 614 793
US-A- 4 266 921

(73) Titulaire : Gigon, Michel Paul Ghislain
20 Bis, rue Maymac
F-41200 Romorantin (FR)

(72) Inventeur : Gigon, Michel Paul Ghislain
20 Bis, rue Maymac
F-41200 Romorantin (FR)

(74) Mandataire : Vander-Heym, Serge
CABINET R. VANDER-HEYM 172, Boulevard Voltaire
F-75011 Paris (FR)

EP 0 370 918 B1

Jouve, 18, rue Saint-Denis, 75001 PARIS

**Description**

La présente invention est relative à un procédé pour la réalisation d'articles à l'aide d'une matière thermoformable suivant le préambule de la revendication 1.

Un domaine d'application de l'invention vise, plus particulièrement mais non exclusivement, le domaine sanitaire et concerne la fabrication de baignoires et analogues.

Dans la demande de brevet Français 8221805 du 27 Décembre 1982 sur lequel le préambule de la revendication 1 est basé on a décrit un procédé permettant, notamment, de réaliser des appareils sanitaires dont la couche externe était constituée à base de résine polyester.

Comme on le sait, une telle couche, qui est obtenue en appliquant la résine par pistolage, est nécessairement très mince et, de ce fait, la coque ainsi réalisée ne peut pas être démoulée facilement et, même si on y parvient, on se trouve alors en présence d'une ébauche très fragile.

Dans la pratique, il n'est donc pas possible, par ce procédé, de fabriquer des baignoires à partir de coques réalisées à l'avance.

Le procédé de l'invention que remédie, notamment, à cet inconvénient, est du genre de ceux consistant à réaliser deux coques correspondant aux couches externes de l'objet et à couler entre celles-ci un béton polyester caractérisé en ce que la couche externe, constituant la face creuse de l'objet, est réalisée en une matière thermoformée telle du polyméthacrylate de méthyle.

Outre le gain de temps réalisé par le façonnage de la coque constituant la couche externe, une telle coque peut être réalisée à l'avance et facilement stockée.

Selon une autre caractéristique du procédé de l'invention, la coque réalisée en une matière thermoformée est traitée et reçoit, sur sa face interne (celle qui est normalement cachée), une couche de renfort réalisée en une résine polyester renforcée par des fibres de verre.

L'invention sera mieux comprise par la description qui va suivre, faite en se référant au dessin annexé à titre d'exemple indicatif seulement, sur lequel :

La figure 1 est une vue en coupe d'une baignoire réalisée selon le procédé de l'invention ;

La figure 2 est une variante de réalisation du détail A de la figure 1 ;

La figure 3 est une vue analogue à celle 1, montrant une variante de réalisation.

La figure 4 est une vue analogue à celle 3 montrant une seconde variante de réalisation.

Le procédé de l'invention est du genre de celui consistant à réaliser deux coques 1 et 2 et à couler entre celles-ci un béton tel que celui décrit dans la demande de brevet Français 8221805 du 27.12.82, l'introduction du béton s'effectuant par l'entremise d'un orifice 3, prévu dans la coque 2.

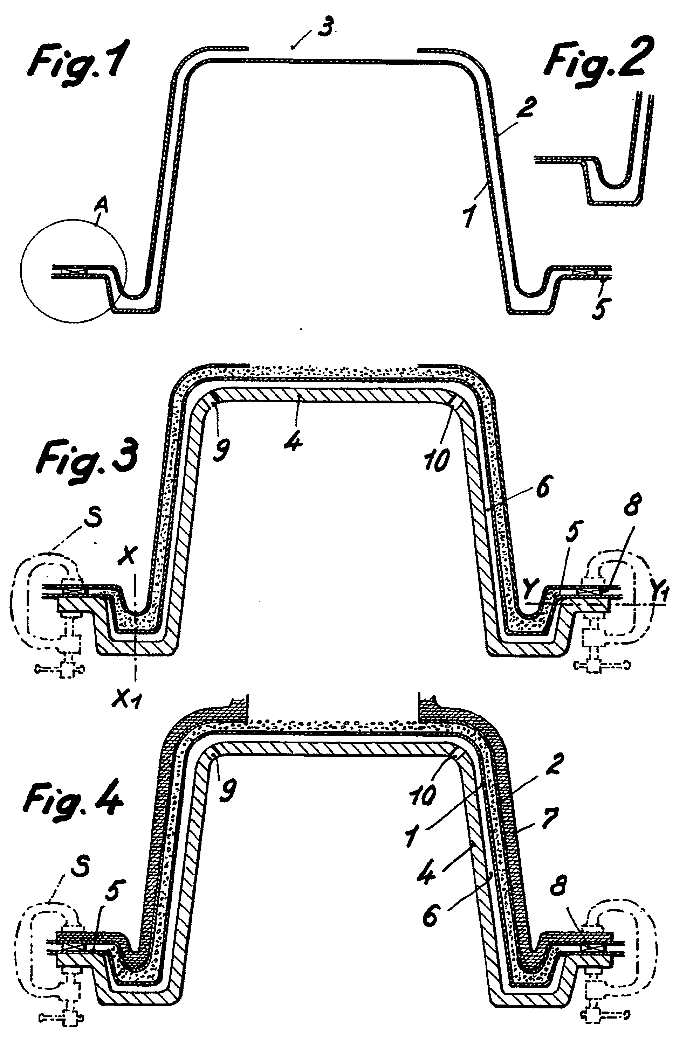

Selon le procédé de l'invention, la coque 1 au moins, est réalisée en une matière thermoformable, telle que du polyméthacrylate de méthyle. Comme une telle matière peut être démoulée sans risque, il est possible à l'avance de réaliser des coques 1 conformes à la figure 1.

La coque 2 peut être réalisée de la même manière ou de façon traditionnelle.

Pour réaliser un article sanitaire tel qu'une baignoire, la coque 1 est placée sur un conformateur 4 sur lequel elle repose par sa périphérie 5.

Les dimensions du conformateur 4 sont telles qu'il existe un espace 6 entre lui et la coque 1, et ce, pour tenir compte du fait qu'il n'est pas possible, à l'aide d'une matière thermoformable, de réaliser deux coques absolument identiques.

Sur la coque 1, on dispose une coque 2 soit en matière plastique thermoformée (comme dans le cas de la figure 3), soit en polyester renforcé par des fibres de verre (cas de la Fig. 4) Dans le cas de la figure 4, la coque 2 est obtenue à l'aide d'un moule 7 et l'ensemble est mis en place sur la coque 1, avant démoulage.

Dans les deux cas, un espace est maintenu entre les coques 1 et 2, à l'aide d'un joint 8 périphérique et de serre-joints S. Dans le cas de la figure 2, le joint 8 n'est pas nécessaire.

Dans tous les cas, il est possible de coller les deux coques au niveau de leur bordure, soit directement (figure 2), soit à l'aide du joint 8.

Durant le coulage et la polymérisation du béton polyester, une réaction exothermique se produit qui tend à échauffer la coque 1 et à la déformer. Pour obvier à cet inconvénient, on envoie de l'air entre la coque 1 et le conformateur 4 qui présente, à cet effet au moins un trou 9 d'entrée de l'air et un trou 10, de sortie.

Selon une variante, préalablement à la mise en place de la coque 2, la coque 1 est renforcée, après traitement, mécanique ou chimique, par un doublage (non représenté) en résine polyester armé de fibre de verre.

Dans tous les cas, lors de la finition, la surface du béton polyester qui apparaît à travers l'ouverture 3, est renforcée par une couche de même nature que celle constituant la coque 2. Dans le cas d'une baignoire, cette partie (non représentée) peut recevoir des plots pour le montage des pieds.

Après retrait du conformateur et, le cas échéant, du moule 7, la bordure est tranchée selon un axe X-X₁ soit selon un axe Y-Y₁.

**Revendications**

1. Procédé pour la réalisation d'articles à l'aide d'une matière thermoformable, du genre de ceux consistant à réaliser deux coques et à couler entre elles un béton polyester et consistant à maintenir la coque (1) sur un conformateur, caractérisé en ce que la coque (1) repose sur le conformateur (4) par sa périphérie seulement de façon à ménager un espace (6) dans lequel on injecte de l'air durant la coulée du béton polyester, ledit conformateur présentant à cet effet, au moins, un trou (9) d'entrée d'air et, au moins, un trou (10) de sortie.

**Patentansprüche**

1. Verfahren zur Herstellung von Artikeln aus wärmeverformbarem Werkstoff, bei dem ein Polyesterharz zwischen zwei Halbschalen gegossen wird und eine der Halbschalen (1) auf einer Abquetschvorrichtung (4) aufliegt, dadurch gekennzeichnet, daß die eine Halbschale (1) nur mit dem Rand auf der Abquetschvorrichtung (4) aufliegt und ein Freiraum (6) gebildet wird, in den während des Polyesterharzgießens Druckluft gepreßt wird, wobei in der Abquetschvorrichtung mindestens eine Öffnung (9) zum Einlassen der Druckluft und mindestens eine Öffnung (10) zum Auslassen der Druckluft vorgesehen sind.

**Claims**

1. Method for the embodiment of articles with the aid of a thermoformable material, said articles being of the type of those consisting of embodying two shells and of casting between them a polyester concrete and consisting of maintaining the shell (1) on a cooling jig, wherein the shell (1) rests on the cooling jig (4) solely via its periphery so as to provide a space (6) into which air is injected when casting the polyester concrete, said cooling jig having to this effect at least one air inlet hole (9) and at least one outlet hole (10).

Fig.1 Fig.2

3

A

2

1

5

Fig.3

S

X

9 4 10

6

8

5

Y Y₁

X₁

Fig.4

S

5

9 10

1

2

7

4

6

8